# EUROPEAN PATENT APPLICATION

(11) **EP 4 307 840 A1**
(43) Date of publication of application: **17.01.2024**
(21) Application number: 23184757.5
(22) Date of filing: 11.07.2023
(51) Int. Cl.: H05B 47/195, H05B 47/115

(54) **LIGHTING CONTROL**

(30) Priority: 13.07.2022 CN 202210823732
(71) Applicant: Suzhou Cyantronic Technology Co. Ltd., Suzhou, Jiangsu 215151 (CN)
(72) Inventor: Kuang, Wen Tao, Thatcham, RG18 4AB (GB)
(74) Representative: Bryers Intellectual Property Ltd

(57) **Abstract**

A remote controller (202) for controlling a lighting system (201) that comprises a light source (203). The remote controller (202) comprises a plurality of mechanical switches (301), each mechanical switch (30IA, 30IB) having a plurality of selectable positions (PI, P2). Different combinations of positions of mechanical switches (30IA, 30IB) of the plurality of mechanical switches (301) define adjustable control parameters for controlling the lighting system (201), and the remote controller (202) is configured to transmit control signals that correspond to the positions of the mechanical switches (30I). A lighting system (20I) controllable by at least one remote controller (202).

## Description

### Field of the Invention

The present invention relates to the field of lighting control, and in particular to a DIP-switch controlled lighting system and the controlling method.

### Background of the Invention

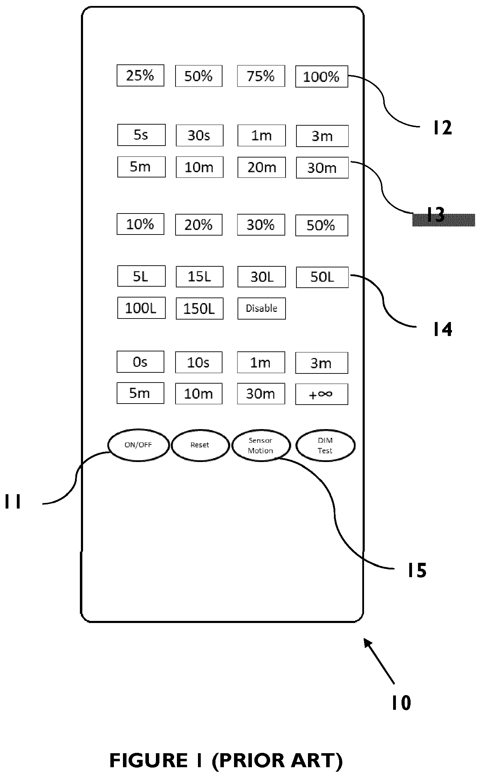

The earliest lamps can only be turned on or off by a switch on the wall, and the control method is basic. With the improving lighting technology, lamps with multi-level adjustment of brightness and color temperatures began to appear, where the brightness and color temperature are configured by turning lights off and on repeatedly in a short time interval with the wall switches. There are also luminaires and sensors that have built-in dials or multi-position switches that are used to configure the luminaire/sensor's parameters, such as output power, color temperature, sensitivity, and time delay etc. To configure a large lighting system that includes multiple luminaires and sensors, it requires physical access to each of the luminaires/sensors; this can be time consuming and requires a lot of effort to ensure the configuration is satisfying to the end user. To resolve such issues, remote controls are introduced for the luminaires and sensor (an example of such a remote control 10 is shown in **Figure 1**), where various lighting parameters or sensor parameters can be set through the buttons marked on the remote controller. This requires many buttons, and the operation can be complicated, and the configuration is relatively difficult to repeat or verify, as each button returns to its original position after being pressed.

It is an object of the present invention to provide an improved remote control system for controlling a lighting system.

### Summary of the Invention

A remote controller for controlling a system having adjustable controllable parameters is provided. The remote controller comprises a plurality of mechanical switches, each mechanical switch having a plurality of selectable positions. Different combinations of positions of mechanical switches of the plurality of mechanical switches define adjustable control parameters for controlling the system, and the remote controller is configured to transmit control signals that correspond to the positions of the mechanical switches. According to a specific application, the remote controller is configured for controlling a lighting system comprising a light source. A system controllable by at least one of the remote controllers is provided. According to a specific application, the system is a lighting system comprising a light source.

According to a first aspect there is provided a remote controller, for transmitting control signals to a receiver of a lighting system comprising a light source, in which: the remote controller comprises a plurality of mechanical switches, each mechanical switch having a plurality of selectable positions, different combinations of positions of mechanical switches of the plurality of mechanical switches define adjustable control parameters for controlling the lighting system, and the remote controller is configured to transmit control signals that correspond to the positions of the mechanical switches.

The use of the mechanical switches in the present invention provides several advantages, particularly in relation to simplifying user operation when compared to a traditional design of a remote control device that utilises pressable buttons for selecting options/providing system setting inputs.

Fewer of the multi-position switches than pressable buttons are required for providing a particular number of user selectable options. This reduces the number of manually-operable elements that a user must manipulate to achieve desired control parameters. The position of each mechanical switch remains the same until the mechanical switch is moved. This provides several benefits, which include enabling a user to easily and quickly verify the options selected, enabling a user to send the same settings to multiple systems using a single remote controller, enabling a system to operate after starting up with the same settings that were in effect when the system was shut down without requiring the user to perform a sequence/combination of manual manipulations of user-operable input elements of the remote controller to select those settings.

In an example, the plurality of mechanical switches comprises a plurality of dual position slide switches.

In an example, the plurality of mechanical switches comprises a plurality of groups of mechanical switches of the plurality of mechanical switches. The number of groups may be any suitable plural number, for example, 2, 3, 4, 5, 6, 7, 8, 9, 10, 11, 12.

In an example, the plurality of mechanical switches comprises at least one group of a number j of mechanical switches, wherein different combinations of positions of the mechanical switches of the group defining a maximum 2i of selectable values of an adjustable control parameter.

In an example, the remote controller comprises a send button operable to cause the remote controller to transmit a control signal corresponding to the positions of the mechanical switches.

In an example, different combinations of positions of the mechanical switches define different values of one or more of the following adjustable control parameters of the lighting system: light source output power level; presence sensor detecting distance; time delay; standby light source output level.

The mechanical switches may thus be used to control one or more sensors of the lighting system in addition to controlling light emitted by the light source of the lighting system.

In an example, the remote controller comprises a dim-up button operable to cause the remote controller to transmit a control signal to increase the brightness of the light emitted by the light source, and a dim-down button operable to cause the remote controller to transmit a control signal to decrease the brightness of the light emitted by the light source.

The remote controller may thus comprise buttons and/or other types of user-operable input elements in addition to the mechanical switches.

In an example, the remote controller is operable to transmit a unique cypher key associated with the remote controller to the receiver. In an application, the unique cypher key is registrable by the receiver, the receiver then being responsive only to control signals received from a remote controller having a unique cypher key registered by the controller. This advantageously provides a security feature that prevents operation of the lighting system by an unauthorized remote controller (which if maintained under the control of an authorised user, prevents operation of the lighting system by an unauthorized person).

In an example, the remote controller comprises a casing that comprises a lid section, the lid section movable between closed and open positions in which the mechanical switches are covered by the lid section and uncovered respectively. When in the closed position, the lid section beneficially protects the mechanical switches against inadvertent movement and damage (which may be caused by physical impact and/or the ingress of pollutants, for example, moisture, dust),

According to a second aspect there is provided a lighting system, comprising at least: a light source, a control unit for controlling the light source, a receiver for communicating control information to the control unit, and at least one remote controller for transmitting control signals to the receiver; in which the or each remote controller is a remote controller according to the first aspect.

In an example, the or each remote controller is a remote controller operable to transmit a unique cypher key associated with the remote controller to the receiver, and the unique cypher key associated with the or each remote controller is registrable by the receiver to render the receiver responsive only to a remote controller having a unique cypher key registered by the receiver.

In an example, the lighting system comprises a presence sensor functional to provide a presence sensor signal to the control unit, the presence sensor signal indicative of the absence or presence of a human within a detecting distance of the presence sensor.

In an example, the detecting distance of the presence sensor is an adjustable control parameter of the lighting system defined by a combination of positions of mechanical switches of the plurality of mechanical switches of the remote controller. Thus, different positions of the mechanical switches of associated with the adjustable control parameter of the detecting distance of the presence sensor define different detecting distances and, in turn, control the detection sensitivity of the presence sensor. The lighting system may utilise a presence sensor in determining to turn off the light source when a human is no longer detected as being present.

In an example, the lighting system comprises a timer. The light system may utilise a presence sensor and a timer in determining to turn off the light source when a human is no longer detected as being present for a particular duration.

In an example, the lighting system comprises a light sensor functional to provide a light sensor signal to the control unit, the light sensor signal indicative of the ambient lux level. The light system may utilise a presence sensor and a light sensor in determining to turn on the light source when a human is detected as being present and the ambient lux level is sensed as being below a light threshold.

Further particular and preferred aspects of the invention are set out in the accompanying dependent claims.

### Brief Description of the Drawings

The present invention will now be more particularly described, with reference to the accompanying drawings, in which:
**Figure 1** is a schematic diagram of a remote control with press buttons of a smart lighting system in the prior art;
**Figure 2** is a block diagram of the lighting system and associated DIP-switch controller diagram of a specific embodiment of the present invention;
**Figure 3** is a structural diagram of a DIP-switch controller of a specific embodiment of the present invention;
**Figure 4** is an exploded diagram of the DIP-switch controller of **Figure 3**;
**Figure 5** illustrates options of a security feature of a lighting system controllable by a least one associated DIP-switch controller; and
**Figure 6** shows a DIP-switch controller according to the present invention.

### Description

Illustrative embodiments and examples are described below in sufficient detail to enable those of ordinary skill in the art to embody and implement the apparatus described herein. It is to be understood that embodiments and examples can be provided in many alternate forms and the invention should not be construed as limited to the embodiments and examples set forth herein but by the scope of the appended claims.

Unless otherwise defined, all terms (including technical and scientific terms) used herein are to be interpreted as is customary in the art. In addition, features referred to herein in the singular can number one or more, unless the context clearly indicates otherwise. Similarly, the terms "comprises", "comprising", "includes", "including", "has" and/or "having" when used herein, specify the presence of the stated feature or features and do not preclude the presence or addition of one or more other features, unless the context clearly indicates otherwise. In addition, it should be noted that relationship terms, such as "first" and "second" are used herein to distinguish one entity or operation from another entity or operation, and do not necessarily require or indicate that these relationships or sequences exists among these entities or operations.

In the following description, all orientational terms, such as upper, lower, radially and axially, are used in relation to the drawings and should not be interpreted as limiting on the invention, unless the context clearly indicates otherwise.

The drawings are not necessarily drawn to scale, and in some instances may have been exaggerated or simplified for illustrative purposes only.

A remote controller for controlling a system having adjustable controllable parameters is provided. The remote controller comprises a plurality of mechanical switches, each mechanical switch having a plurality of selectable positions. Different combinations of positions of mechanical switches of the plurality of mechanical switches define adjustable control parameters for controlling the system, and the remote controller is configured to transmit control signals that correspond to the positions of the mechanical switches. According to a specific application, the remote controller is configured for controlling a lighting system comprising a light source. A system controllable by at least one of the remote controllers is provided. According to a specific application, the system is a lighting system comprising a light source.

**Figure 1** shows a prior art remote control 10 for a lighting system, the remote control 10 comprising buttons, such as buttons 11-15, by means of which various lighting parameters or sensor parameters can be set. Such prior art remote controllers feature many buttons, so that operation to achieve a desired configuration of the lighting system can be complicated and the desired configuration can be relatively difficult to repeat or verify as the buttons return to their original positions after being pressed.

The present invention provides at least the following aspects:
a remote control system for controlling a lighting system, in which the remote control system comprises a remote controller that is a DIP-switch controller;
a lighting system controllable by a remote control system, the remote control system comprising a remote controller that is a DIP-switch controller;
a remote controller for controlling a lighting system, wherein the remote controller is a DIP-switch controller.

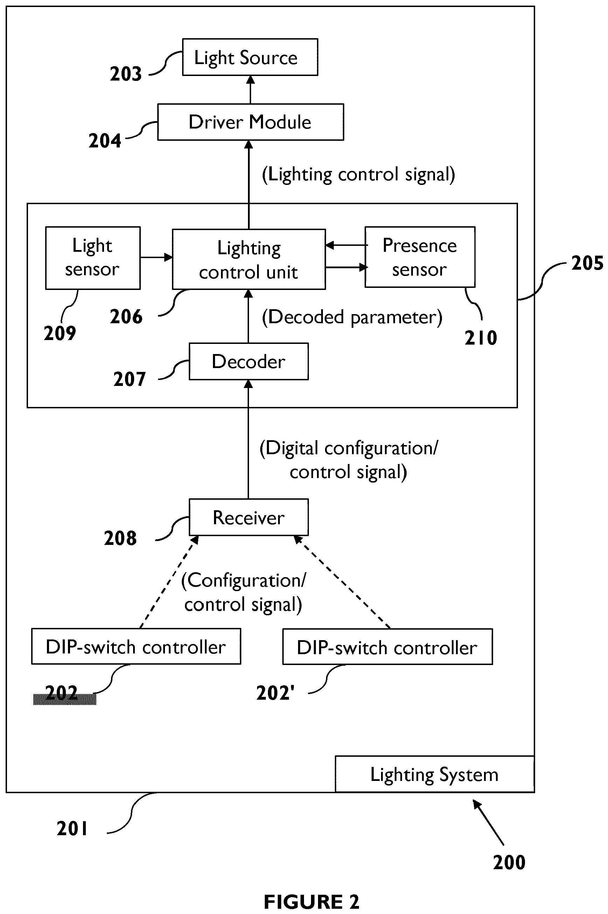

A block diagram 200 of a lighting system 201 configured to be controlled by a remote controller 202 according to a specific embodiment is shown in **Figure 2**.

As will be explained further below, the remote controller 202 may be the only remote control device that the lighting system 202 can be controlled by, or may be one of a plurality of remote controllers 202, 202' that the lighting system 202 can be controlled by.

The shown lighting system 201 comprises a light source 203, a driver module 204, a main control unit 205, which comprises a lighting control unit 206 and a decoder 207, and a receiver 208. In this specific illustrated example, the lighting control unit 206 and decoder 207 are independent devices but could alternatively be provided by a single, combined device. The lighting control unit 206 is electrically connected to the driver module 204, which is associated with the light source 203. The decoder 207 communicates with the receiver 208, which is configured to receive signals from the remote controller 202.

As will be described further, the remote controller 202 is for transmitting control signals to the receiver 208, the receiver 208 is for communicating control information to the main control unit 205, and the main control unit 205 is for controlling the light source 203.

The receiver 208 receives a configuration/control signal from the remote controller 202 and provides a digital configuration/control signal to the decoder 207, which provides a decoded parameter to the lighting control unit 206. The lighting control unit 206 provides a lighting control signal to the driver module 204 to control the lighting source 203.

The main control unit 205 may comprise at least one sensor in communication with the lighting control unit 206. According to this specific illustrated example, the main control unit 205 comprises a light sensor 209 and a presence sensor 210.

The lighting system 201 of **Figure 2** thus comprises at least a light source 203, a driver module 204, a main control unit 205 that includes at least a lighting control unit 206 and a decoder 207, and a receiver 208, the lighting control unit 206 electrically connected with the driver module 204 and the decoder 207 configured to communicate with the receiver 208. The remote controller 202 is physically separate from the lighting system 201.

The remote controller of the present invention, and associated method of controlling (configuring) lighting systems, is designed to achieve the following features:
1. allowing the previous setting to be stored on the remote controller for verification;
2. allowing the same setting to be sent to multiple lighting systems;
3. providing security of lighting control, restricting operation by an unauthorized remote controller (restricting access of unauthorized remote controllers).

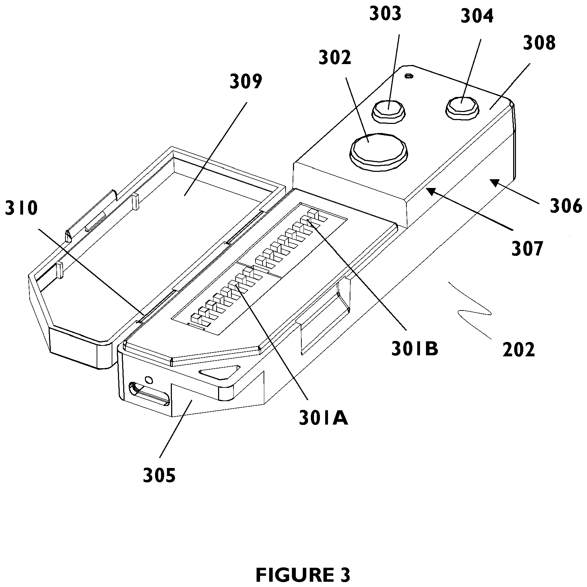

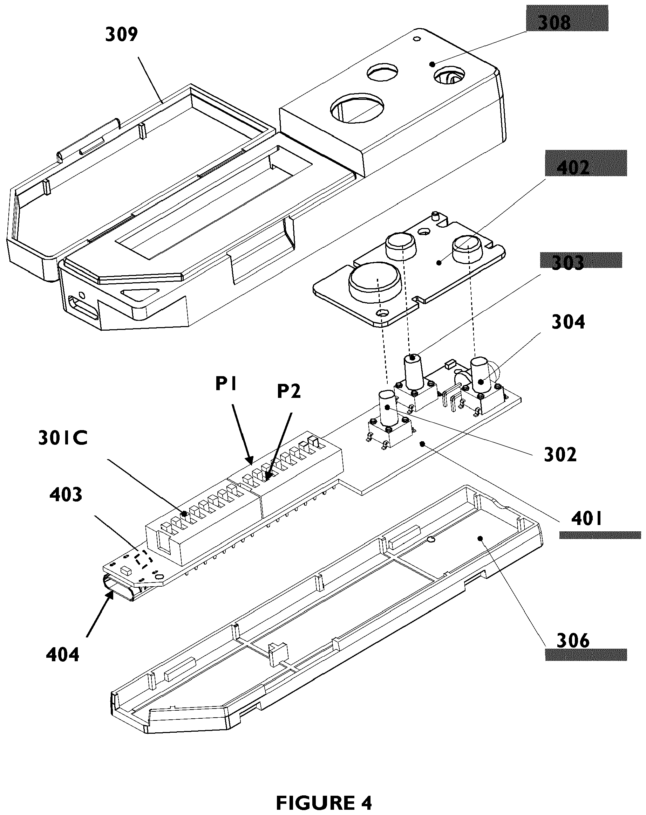

Features of the remote controller 202 of the present specific embodiment will now be described with reference also to **Figures 3** **and** **4**.

The remote controller 202 comprises a plurality of mechanical switches 301, each mechanical switch having a plurality of positions. According to the present specific embodiment, the mechanical switches are dual position slide switches, such as DIP-switches 301A, 301B (**Figure 3**) and 301C (**Figure 4**), all of which have first and second positions. Each DIP-switch 301 is repeatedly slidable between the first position (indicated P1 in **Figure 4**) and the second position (indicated P2 in **Figure 4**). The remote controller 202 is therefore also referred to herein as a DIP-switch controller.

According to the present specific embodiment, the remote controller 202 further comprises a "send" button 302, a "dim up" button 303 and a "dim down" button 304, which will be described further below.

The remote controller 202 comprises a casing 305, which generally includes a lower casing 306 and an upper casing 307. According to a specific example, the casing 305 is made from a plastics material. Inside the casing 305 is a printed circuit board (PCB) 401, on which the DIP-switches 301 and the press buttons 302-304 are mounted. The upper casing 307 features a surround section 308 and a lid section 309.

A button set cover 402 is provided over the top of the press buttons 302-304. In this specific example, the button set cover 402 is a protective insulating silicone cover. The surround section 308 defines openings therein to receive the press buttons 302-304 and the overlying button set cover 402, and the DIP-switches 301.

The lid section 309 is provided to selectively cover the DIP-switches 301. The lid section 309 is movable between closed and open positions in which the DIP-switches 301 are covered by the lid section 309 and uncovered respectively. According to the specific illustrated example, the lid section 309 of the upper casing 307 is pivotally attached to the lower casing 306 by one or more hinges 309 that allow the lid section 309 to be rotated between open and closed positions. When the DIP-switches 301 are not being moved, the lid section 309 can stay closed to protect them and to avoid unexpected or unintended changes to their positions.

The PCB 401 features a communication circuit that is configured to transmit configuration/control signals corresponding to the positions of the DIP-switches 301 to the receiver 208. In addition, the remote controller 202 comprises a rechargeable battery, indicated at 403, for providing power to the communication circuit, and a USB port 404 for use in recharging the rechargeable battery 403.

The position of the DIP-switches 301 define a configuration/control setting for the lighting system 201. Without external manual operation, the positions of the DIP-switches 301 remain unchanged. This means that a previous configuration/control setting is saved by the position of the DIP-switches 301.

In addition, a user can verify the setting of the lighting system 201 by observing the positions of the DIP-switches 301. Further, the configuration/control setting defined by the positions of the DIP-switches 301 can easily be used to set other lighting systems, which can comprise a self-contained luminaire or a sensor.

When the "send" button 302 is pressed, the remote controller 202 sends a configuration/control signal that corresponds to the positions of the mechanical dual position slide switches (DIP-switches) 301.

The receiver 208 is configured to receive and demodulate an analogue configuration/control signal from the remote controller 202, converting the received signal to a digital signal, before sending on to the decoder 207. The decoder 207 is configured to decode configuration/control signals received at the receiver 208 using a pre-stored decoding program, and to send decoded parameters to the lighting control unit 206. The lighting control unit 206 is configured to, in response to receiving decoded parameters from the decoder 207, send lighting control signals to the driver module 204 to adjust the light source 203 accordingly.

The decoded parameters output by the decoder 207 can include one or more of: output power level, light threshold, detecting distance, time delay and standby light level. The lighting control unit 206 uses a prestored program and the available decoded parameters to make a control decision and sends a corresponding lighting control signal to the driver module 204 to make any required adjustments to the light source 203. The lighting control signal sent to the driver module 204 by the lighting control unit 206 can be one or more channels of ON/OFF or dimming signals.

As mentioned above, in this specific embodiment, the main control unit 205 comprises a light sensor 209, which is configured to detect the environment light level, and to send a signal corresponding to the detected light level to the lighting control unit 206. The lighting control unit 206 compares the received light level signal with at least one light threshold. Based on the comparison result, the lighting control unit 206 sends a lighting control signal to the driver module 204 that, in response to receiving the lighting control signal, adjusts the light source 203 accordingly. The aforementioned at least one light threshold is set using the remote controller 202.

As also mentioned above, in this specific embodiment, the main control unit 205 comprises a presence sensor 210, which is configured to detect the presence of a human body with a preconfigured detection sensitivity, also referred to hereinafter as the detecting distance. The presence sensor 210 is usable to provide a smart lighting system function that switches off the light source 203 when no human presence is detected. In this embodiment, a time delay for turning off the light is defined by DIP-switches of the remote controller 202. The use of such a time delay avoids the lighting being turned off/on frequently due to mis-detection or a person leaving the detection area of the presence sensor 210 for a very short period. On detecting a human body present, the presence sensor 210 sends a detection signal to the lighting control unit 206. In response to receiving the detection signal, the lighting control unit 206 sends a lighting control signal to the driver module 204, based on preconfigured parameters that include: time delay, standby light level. In response to receiving the lighting control signal, the driver module 204 adjusts the light source 203 accordingly. One or more of the aforementioned detection sensitivity (detecting distance), time delay, and standby light level are set using the remote controller 202.

Pressing and holding the "dim up" button 303 causes the lighting control unit 206 to send a lighting control signal to the driver module 204 to increase the brightness of the light source 203 continuously until the "dim up" button 303 is released. Pressing and holding the "dim down" button 304 causes the lighting control unit 206 to send a lighting control signal to the driver module 204 to decrease the brightness of the light source 203 continuously until the "dim down" button 304 is released. Thus, the brightness of the light emitted by the light source is adjustable, between a minimum brightness and a maximum brightness, the remote controller comprising a first button operable to increase the brightness of the light emitted by the light source and a second button operable to decrease the brightness of the light emitted by the light source.

Thus, parameters that determine the lighting control signal sent by lighting control unit 206 to driver module 204 include one or more of output power, light threshold, detection sensitivity (detecting distance), time delay, and standby light level.

Furthermore, after being turned on, the lighting system 201 should operate based on the parameters set previously before the lighting system 201 was turned off. In other words, the lighting system 201 should start up and operate using the same parameters that were in effect when the lighting system 201 was shut down.

In an example, the remote controller 202 has a number i of DIP-switches 301 in a first group - Group 1 - , where i is a positive integer. With i number of DIP-switches being in the Group 1, there is maximum 2ⁱ number of selectable output power levels. According to a specific example operation, when all the DIP-switches are switched to the first position, the output power level is set to minimum; conversely, when all the DIP-switches are switched to the second position, the output power level is set to maximum.

Additionally, or alternatively, the remote controller 202 has a number j of DIP-switches 301 in a different group - Group 2 -, where j is a positive integer. With j number of DIP-switches in the Group 2, there is maximum 2i number of selectable standby light levels. According to a specific example operation, when all the DIP-switches are switched to the first position, the output standby light level is set to minimum; conversely, when all the DIP-switches are switched to the second position, the standby light level is set to maximum.

Additionally, or alternatively, the remote controller 202 has a number k of DIP-switches 301 in a different group - Group 3 - , where k is a positive integer. With k number of DIP-switches in the Group 3, there is maximum 2^{k} number of selectable light threshold levels. According to a specific example operation, when all the DIP-switches are switched to the first position, the output light threshold level is set to minimum; conversely, when all the DIP-switches are switched to the second position the light threshold level is set to maximum.

Additionally, or alternatively, the remote controller 202 has a number m of DIP-switches 301 in a different group - Group 4 - , where m is a positive integer. With m number of DIP-switches in the Group 4, there is maximum 2^{m} number of available detection sensitivity levels (detection distance). According to a specific example selectable, when all the DIP-switches are switched to the first position, the detection sensitivity level is set to minimum; conversely, when all the DIP-switches are switched to the second position the detection sensitivity level is set to maximum.

Additionally, or alternatively, the remote controller 202 has a number n of DIP-switches 301 in a different group - Group 5 - , where n is a positive integer. With n number of DIP-switches in the Group 5, there is maximum 2ⁿ number of selectable time delay periods. According to a specific example operation, when all the DIP-switches are switched to the first position, the time delay period is set to minimum; conversely, when all the DIP-switches are switched to the second position the time delay period is set to maximum.

The remote controller 202 of the present invention provides the benefit that with × number of DIP-switches in a group, the group defines 2× number of levels of a particular parameter. When compared to a conventional remote control design that requires 2× number of press buttons, this significantly simplifies the design of the remote controller for simplified user operation, and enables the physical size of the remote controller to be reduced.

The remote controller 202 of the present invention also provides the benefit that the positions of the DIP-switches 301 define lighting system control/configuration parameters for the 201 that remain unchanged until subsequent manual operation of the DIP-switches 301, and that can enable a user to configure multiple device/lighting systems with the same lighting system control/configuration parameters by simply pressing the "send" button 302. When compared to a conventional remote control design that requires a user to press the same combination of buttons anew, which can be hard to memorize and verify whether the combination of button presses is correct or not, this significantly simplifies user operation.

The remote controller 202 of the present invention preferably incorporates a security feature that will now be described.

According to the present specific embodiment, the remote controller 202 has a unique cypher key associated with it that can be registered at the receiver 208 so that the receiver 208 responds only to remote controller 202 that has the cypher key registered.

When a send key button, in a specific embodiment the "send" button 302, is pressed, the remote controller 202 sends its unique cypher key to the receiver 208. The unique cypher key may be generated by the remote controller 202 and then registered in the remote controller 202 and sent by the remote controller 202 to the receiver 208. The receiver 208 registers the cypher key in its memory. The receiver 208 may receive an encrypted cypher key, and then decode the encrypted cypher key and register the decoded cypher key in its memory to complete the cypher key registration.

Preferably, the receiver 208 can register more than one remote controller cypher key. Thus, a unique cypher key associated with each of one or more remote controllers 202, 202' is registrable by the receiver 208 to render the receiver 208 responsive only to control signals transmitted by a remote controller 202, 202' that has a unique cypher key registered by the receiver 208.

Any suitable way of enabling multiple cypher keys to be registered may be implemented. According to an example method of registering multiple cypher keys at the receiver 208, a first remote controller 202, also referred to hereinafter as the master controller, is registered at the receiver 208; then a second remote controller 202' is registered at the receiver 208 by performing the steps of pressing the "send" button 302 of the master controller 202 followed by pressing the "send" button 302' of the second remote controller 202' within a short predefined time of pressing the "send" button 302 of the master controller 202.

Any suitable way of enabling cypher key registration to be reset may be implemented. For example, cypher key registration at the receiver 208 can be reset by repeating a predefined number of ON/OFF cycles of the lighting system 201 within a predefined period or by pressing a cypher key reset button that is connected, for example physically connected, to the lighting system 201.

According to a specific embodiment, if the receiver 208 has not registered any cypher key of a remote controller 202, 202', it will respond to any remote controller 202, 202'.

The above-described security feature of the remote controller 202 of the present invention therefore also provides the benefit of protecting the lighting system 201 (including sensors) from unauthorized access, which security feature is not found with a traditional remote control device/conventional remote control design.

Features of selected specific examples, to further illustrate aspects of the present invention, are set out below.

The configuration/control information transmitted from the remote controller 202 to the receiver 208 contains control parameters corresponding to the positions of the DIP-switches 301, each of which may be allocated to one or more groups. For example, with a group of 4 DIP-switches: if all 4 DIP-switches are in a first position P1, the control parameter to be transmitted (when "send" button 302 is pressed) is 0000; if all 4-DIP-switches are in a second position P2, the control parameter to be transmitted is 1111; if a first and a third of the DIP-switches are set to the second position P2 while a second and the fourth of the DIP-switches are set to the first position P1, the control parameter to be sent is 1010.

In an example, a set of 4 DIP-switches 301 of the remote controller 202 are divided into two groups, with one of the groups - Group 1 - including a first and a second of the DIP-switches and corresponding to a light threshold parameter, and the other one of the groups - Group 2 - including a third and the fourth of the DIP-switches and corresponding to a time delay parameter. For each of the two DIP-switches of each group, if it is switched to a first position P1 it is noted/indicates 0, but if it is switched to a second position P2, it is noted/indicates 1. The combination of the 2 DIP-switches gives 4 binary numbers: 00, 01, 10, 11, in the order from the lowest to the highest. When the DIP-switches of the set of 4 DIP-switches are switched to positions corresponding to the binary sequence 0110, when this is decoded at the decoder 207, the lighting threshold parameter is set to the second level 01, and the time delay parameter is set to the third level 10. The decoded configuration/control parameters are then sent to the lighting control unit 206, which sends a corresponding lighting control signal to the driver module 204 associated with the light source 203.

In an example, the main control unit 205 comprises a light sensor 209 that detects the lux level of the environment (ambient lux level). The light sensor 209 sends a lux level signal to the lighting control unit 206, which compares the received lux level with a prestored light threshold and, in response, sends a lighting control signal to the driver module 204 accordingly. In the example, the light threshold level defined at the remote controller 202 may correspond to one of 4 lux levels, which are defined by the positions of 2 DIP-switches that, in combination, can indicate 4 different binary numbers: 00, 01, 10, 11, in the order from the lowest to the highest. For example, a first level, noted 00, corresponds to 100 lux, a second level, noted 01, corresponds to 400 lux, a third level, noted 10, corresponds to 800 lux and the fourth level, noted 11, corresponds to 1500 lux. When the light threshold level is set to a level, for example the second level at 400 lux, the decoded lighting threshold parameter is sent to the lighting control unit 206 and saved in memory as the prestored lighting threshold against which future lux level signals received from the light sensor 209 are compared. When the lux level received from the light sensor 209 is determined to be lower than the saved light threshold, the lighting control unit 206 sends a lighting control signal to the driver module 204 to turn on the light source 203. However, when the main control unit 205 comprises presence sensor 210, whether this is detecting human presence should also be considered in determining whether the light source 203 should be turned on if the lux level is below the saved light threshold. More specifically, a decision to turn the light source 203 on should be made only when the environment light level is lower than the light threshold and human presence is detected.

In an example, the main control unit 205 comprises a timer, which may be provided by any suitable hardware or software arrangement.

In an example in which the main control unit 205 comprises presence sensor 210 with an associated time delay for turning off the light source 203 after detecting that a human is no longer present, the time delay period defined at the remote controller 202 may correspond to one of 4 time delay period, which are defined by the positions of 2 DIP-switches that, in combination, can indicate 4 different binary numbers: 00, 01, 10, 11, in the order from the lowest to the highest. For example, a first time period noted/indicated by 00 corresponds to 1 minute, a second time period noted/indicated by 01 corresponds to 2 minutes, a third time period noted/indicated by 10 corresponds to 5 minutes, and the fourth time period noted /indicated by 11, corresponds to 10 minutes. When the time delay period is set to the third time delay value at 5 minutes, the lighting control unit 206 turns off the light 5 minutes after no human presence is detected.

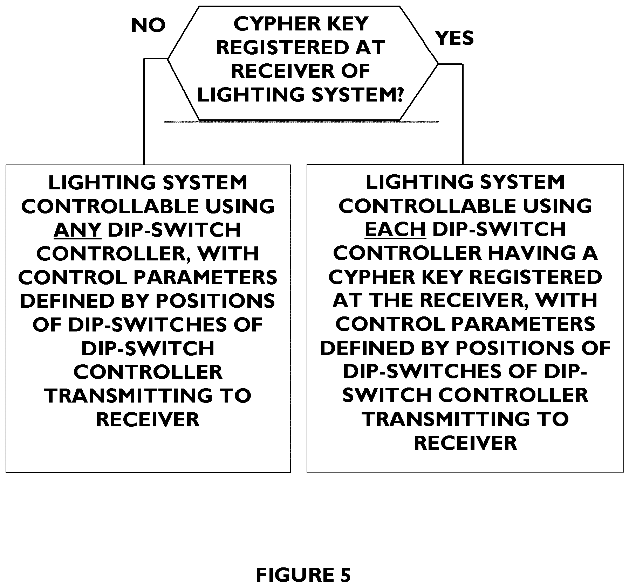

With reference also now to **Figure 5**, in a preferred example, the remote controller 202 has a unique cypher key that is registered at the receiver 208 so that the receiver responds only to that remote controller 202. This provides a security feature that ensure that once a receiver 208 registers the cypher key of a remote controller 202, the lighting system 201 that includes the receiver 208 can only be configured/controlled by the remote controller 202 having the registered unique cypher key. If no cypher key is registered at the receiver, then the receiver and its associated lighting system can be controlled by any DIP-switch controller 202.

In an example, the process of registering a cypher key of a controller at the receiver involves the following features/steps:
- Among the DIP-switches there is a DIP-switch noted/indicated as a "pair" switch, and another DIP-switch noted/indicated as a "user" switch;
- The "pair" switch is set to a first position (ON position), and the "user" switch is set to the second position (OFF position);
- The "send" button is pressed, which causes the cypher key of the DIP-switch controller to be sent to the receiver and to be registered at the receiver.

Following registration of the controller at the receive, the "pair" switch is set to the second position (OFF position) and the "user" switch is set to the first position (ON position), which allows the user to configure/control the lighting system with other DIP-switches of the remote controller with transmitted signals now being encrypted with the cypher key.

In a specific example, the cypher key is protected by a cyclic redundancy check (CRC) code that is appended to the end of the cypher key; the receiver uses a CRC decoder to obtain the cypher key. In an example, when the "user" switch is set to the ON position, the cypher key is used to encrypt the configuration/control signal. In a specific example, encryption of the configuration/control signal is achieved using an XOR cipher on the cypher key with the CRC code appended.

In an example, the lighting system 201 can be configured to be exclusively controlled by several DIP-switch controllers 202, 202'.

In an example, the process of registering the cypher keys of multiple controllers at the receiver involves the following features/steps:
- After the first controller is registered at the receiver using the process described above, the first controller is designated as a "master" controller. It is then required for any additional controllers to be registered with the receiver.
- To register an additional controller, on both the "master" controller and the additional controller, the DIP-switch thereof configured as the "pair" switch is set to "ON" and the DIP-switch thereof configured as the "user" switch is set to "OFF".
- The "send" key on the "master" controller is pressed and then, within a predetermined period (for example, 5 seconds) of pressing the "send" key on the "master" controller, the "send" key on the additional controller is press; the cypher key of the additional controller is now registered at the receiver in addition to the cypher key of the master controller.

Any suitable process for resetting a cypher key registration of the receiver/clearing cypher keys registered at the receiver may be implemented.

According to a first example method, a cypher key reset is performed by: switching the lighting system off and on, using a mains switch, for a predetermined plural number of times with a predetermined duration (for example, switching the lighting system off and on 3 times within 5 seconds clears any cypher keys registered).

According to a second example method, a cypher key reset is performed by operating a reset button physically attached to the lighting system in a predetermined manner (for example, pressing the reset button and holding it down for 3 seconds clears any cypher keys registered).

According to a third example method, a cypher reset can be performed using the "dim up" and "dim down" buttons 303, 304 as follows:
- Set both the DIP-switch thereof configured as the "pair" switch and the DIP-switch thereof configured as the "user" switch to "ON";
- Double-press the "dim up" button and then, within a predetermined period (for example, 5 seconds) of double-pressing the "dim up" button, double-press the "dim down" button; the cypher key(s) registered at the receiver are cleared;
- Set the "pair" switch to "ON" (leaving the "user" switch set to "ON"; this allow the DIP-switch controller to be used to configure/control the lighting system.

A specific example method of configuring/controlling a lighting system, the lighting system as described above with reference to, and as shown in **Figure 2**, comprises the following features/steps:
- Adjusting the DIP-switches of the DIP-switch controller selects control parameters;
- Pressing the "send" button of the DIP-switch controller causes a configuration/control signal to be sent by the DIP-switch controller to the receiver of the lighting system, the configuration/control signal corresponding to the selected control parameters;
- The receiver demodulates and decodes the configuration/control signal received from the DIP-switch controller and sends the decoded control parameters to the lighting control unit;
- The lighting control unit processes the control parameters received from the receiver and sends a control signal to the driver module accordingly;
- If a sensitivity (detecting distance/detection area) control parameter of a presence sensor of the lighting system is received, the lighting control unit sends a control signal to the presence sensor and adjusts the sensitivity accordingly;
- The lighting control unit receives signals from a light sensor and a presence sensor of the lighting system, the signals based on control parameters previously stored, processes the received signals and sends a control signal to the driver module accordingly.

In an example, the DIP-switch controller comprises 10 DIP-switches: 1^{st} and 2^{nd} of the DIP-switches are configured for adjusting the wattage to a selected one of 4 available levels, 3^{rd} and 4^{th} of the DIP-switches are configured for adjusting the standby light to a selected one of 4 available levels, 5^{th} and 6^{th} of the DIP-switches are configured for setting the light threshold to a selected one of 4 available levels, 7^{th} and 8^{th} of the DIP-switches are configured for setting the presence sensor detention range to a selected one of 4 available magnitudes, and 9^{th} and 10^{th} of the DIP-switches are configured for configuring the time delay to a selected one of 4 available values.

By way of a specific illustrative example, when the 1^{st}, 4^{th}, 5^{th}, 7^{th}, 8^{th} and 10^{th} DIP-switches are set to the first position (P1) and the remainder of the DIP-switches are set to the second position (P2) after decoding, the decoded configuration/control parameter is 0110010010, and at the lighting control unit, the parameters are saved as: 2^{nd} level of output power (set to 75% of the rated power when turned on); 3^{rd} level of standby lux (30% of output power), 2^{nd} level of light threshold (100lux), 1^{st} level of presence sensor detecting distance (25% of the maximum detection distance), 3^{rd} level of the time delay (5 minutes).

According to a specific example, and continuing with the example control parameters of the specific illustrative example above, when human movement is detected within the preconfigured detection area, a detection signal is sent by the presence sensor to the lighting control unit. The lighting control unit also receives a lux level signal from the light sensor; if the lux level is lower than the preconfigured light threshold of 100 lux, the lighting control unit sends a control signal to the driver module to turn on the light source at the preconfigured output power of 75% of the rated power of the light source when it is turned on. Once the light source is turned on, if no further human presence is detected during the preconfigured time delay of 5 minutes, the lighting control unit sends a control signal to the driver module to adjust the light output to the preconfigured standby light level of 30% of the output power. If human presence is again detected, the lighting control unit responds to a detection signal sent by the presence sensor to cause the light source to be adjusted to the preconfigured output power of 75% of the rated power again.

As already made clear, a user can change the control parameters of the lighting system using the DIP-switch controller. By way of a specific illustrative example: to set the output power one level higher to the 3^{rd} level, set the light threshold down one level to the 1^{st} level, set the presence sensor detecting distance up one level to the 2^{nd} level, and set the time delay to one level lower to the 2^{nd} level, requires a control/configuration signal that corresponds to 1011000101, which is achieved by the user setting the 2^{nd}, 5^{th}, 6^{th}, 7^{th} and 9^{th} DIP-switches to the first position (P1) and the other DIP-switches to the second position (P2).

In an example, the lighting system includes an override function for the presence sensor, with two modes: "override on" and "override off". According to a specific example, a user can operate the two override modes using the "dim up" and "dim down" buttons 303, 304 as follows:
- Double-pressing the "dim up" button causes the lighting control unit to send a control signal to the driver module to turn on the light source at the configured output power; the light source stays on until the "dim up" button is double-pressed again;
- Double-pressing the "dim down" button causes the lighting control unit to send a control signal to the driver module to turn on the light source off; the lighting control unit will not respond to a detection signal from the presence sensor until the "dim down" button is double-pressed again.

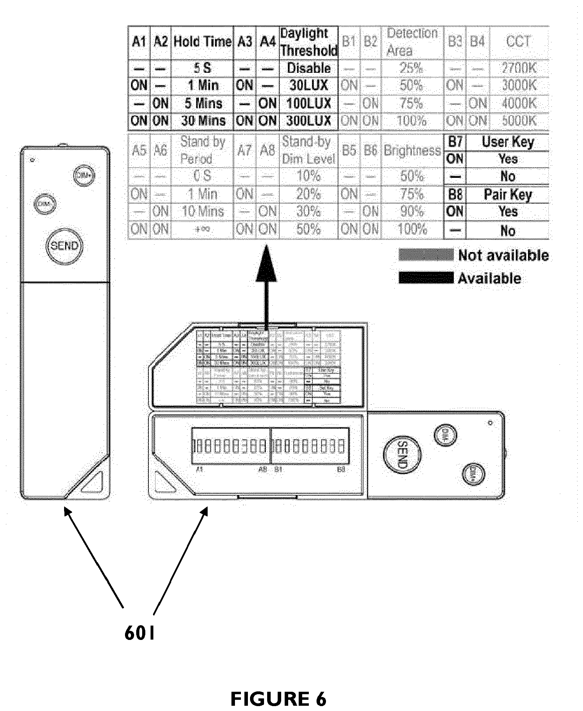

A specific example of a DIP-switch controller 601 according to the present invention is shown in **Figure 6****.** The DIP-switch controller 601 comprises 16 DIP-switches, which are divided into a Group A of DIP-switches, comprising DIP-switches A1-A8, and a Group B of DIP-switches, comprising DIP-switches B1-B8, The DIP-switch controller 601 further comprises a "SEND" button, and "DIM+" and "DIM-" buttons like those of the remote controller 202 shown in **Figure 2** and described above.

In use, the DIP-switch controller (remote control) sends configuration/control signals to a receiver of a lighting system. Example instructions for use of the remote control (DIP-switch controller) are set out below. In an example, the PIR sensor has a detection radius of 3.5m when mounted at a height of 3m.

In an example, a maximum of three remote controls (DIP-switch controllers) may be paired with one sensor.

The DIP-switch controller 601 comprises settings for an "ON/OFF" model of luminaire and additional setting a "DIMMER" model of luminaire.

### Settings for the ON/OFF model:

DIP-switches A1-A2 - Hold time: the time delay for the lights staying on after movement being detected.

DIP-switches A3-A4 - Daylight Threshold: the sensor is activated when daylight is lower than the threshold.

### Additional settings for the DIMMER model:

DIP-switches A5-A6 - stand by period: time period when the light remains at dimmed level in the absence of motion detection.

DIP-switches A7-A8- Stand-by Dim Level: dimmed light level required in the absence of motion detection.

### "SEND" button:

Press to send configuration (control/configuration signal corresponding to position of DIP-switches).

### "DIM-" button ("dim down" button):

Press once to dim down.

Double press to initiate override & stay-off function.

### "DIM+" button ("dim up" button):

Press once to dim up.

Double press to initiate override & stay-on function.

In this example, the operating parameters of the lighting system may be set using pre-set modes as well as via user selections made with the remote control (DIP-switch controller).

### • Pre-Set scene modes

A "scene" switch is provided on the light fitting, for example under a magnetic bezel at the front of the light fitting. Three pre-set modes are available. When set, the connected luminaire will only detect motion and switch on or off when the ambient light levels are below the pre-set value shown below.

### "Scene" switch settings

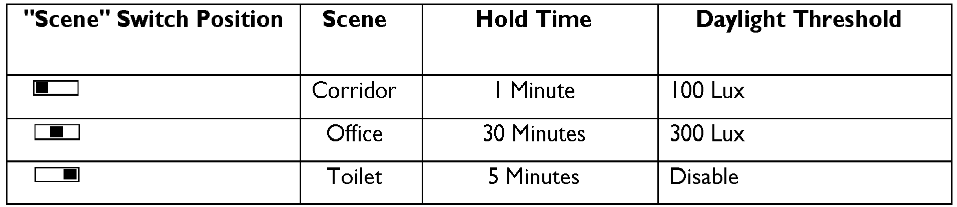

The sensor ships with a default scene (Office Scene).

The control/configuration signal sent by the remote control overrides the scene selection.

### • Remote Control DIP Switch Settings

The remote control is useful for testing, adjusting settings without using the DIP-switches, and for manual override of the PIR sensor using the DIM+ and DIM- buttons.

The DIP-switches are accessible under a front cover of the remote control body. The remote control features a Type C charging port.

### Pairing remote controls to the PIR sensor

- Before commencing pairing, ensure all DIP-switches on all remote controls are in the OFF position;
- Ensure the PIR sensor and the luminaire are powered on;
- Set DIP-switch B8 to the ON position on all three remote controls;
- Point a first of the remote controls at the sensor and press its SEND button - the luminaire will switch OFF/ON/OFF/ON (Administrator setting successful);
- If using one or two more remote controls, point the first remote control at the sensor once again and press its SEND button - the luminaire will switch OFF/ON/OFF/ON; following this step, additional remote control can be paired with sensor as below;
   - point a second remote control at the sensor and press its SEND button - the luminaire will switch OFF/ON/OFF/ON (Second remote control registration successful);
   - If using, point the third remote control at the sensor and press its SEND button - the luminaire will switch OFF/ON/OFF/ON (Third remote control registration successful);

The/each remote control is now paired to the sensor.
- Set DIP-switch B8 to the OFF position on the/each remote control;
- Set DIP-switch B7 to the ON position on the/each remote control;

The/each paired remote control can now be used to adjust the sensor settings as per the remote control DIP switch settings, as outlined below:
- Once the DIP-switches are set on the remote control, point the remote control at the sensor and press its SEND button.

The luminaire will switch OFF/ON and the sensor will flash with a blue indicator, showing that the sensor settings have been updated.

If more than one remote control is paired to the sensor, each remote control can be used to adjust the settings independently.

### User Key

After successful pairing, when the remote control "pair" button is set to "NO" and the "user" button is set to "YES", the DIP-switch settings can be successfully sent from the paired remote control to the sensor. The luminaire will flash OFF/ON and blue indicator will be visible on the sensor, to indicate that the settings have been received.

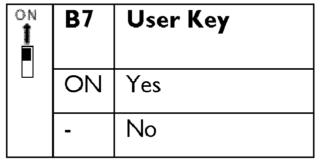

### Pair Key

During commissioning and set up of remote control(s), the "Pair" key must be set to "Yes", "User" key must be set to "No"

To reset the pairing, from sensor power on within 2 minutes, switch the supply OFF/ON three times within 5 seconds. The luminaire will flash for 30 seconds. If there is no "Pairing" command received during this time, the sensor can be controlled by setting the "Use Key" to "No".

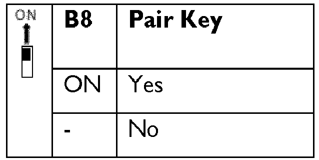

### Hold Time

This is the time that the luminaire will remain on after presence is no longer detected.

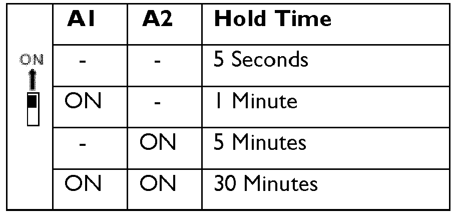

### Daylight Threshold

The sensor can be set to prevent illumination when the ambient light is above the Daylight Threshold. When set to disabled, the sensor will switch the luminaire on when presence is detected regardless of the ambient light level.

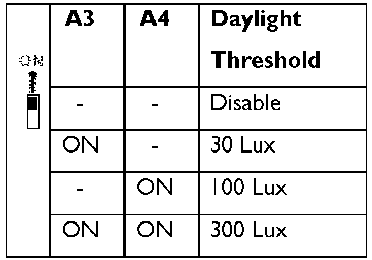

### Manual Override (ON)

Double pressing the "DIM+" button turns the luminaire ON. After a period of 30 minutes, if no motion is detected the sensor and luminaire will return to automatic operation. Any motion detected will re-start the 30 minutes timer. Double pressing the "DIM+" button at any time during this period will return the system to automatic operation.

### Note:

Manual override (ON) can also be activated without using the remote control, by switching the sensor OFF/ON/OFF/ON within a 3 second period. After a period of 30 minutes if no motion is detected, the sensor and luminaire will return to automatic operation. Any motion detected will restart the 30 minutes timer. Powering off the sensor for 3 minutes will return the sensor to automatic operation.

### Manual Override (OFF)

Double pressing the "DIM-" button turns the luminaire OFF. After a period of 30 minutes, if no motion is detected the sensor and luminaire will return to automatic operation. Any motion detected will restart the 30 minutes timer. Double pressing "DIM-" button at any time during this period will return the system to automatic operation.

### Use

The/each remote control can be marked with information of the corresponding sensor or other products being controlled. The user can simply check the configuration for the sensor/products by looking at the DIP switches of the remote control. Once the sensors/products are configured, the remote control can be stored away for future use.

Disclosed herein is a lighting system that is controlled by a DIP-switch controller and a control method thereof. The lighting system comprises a light source, a driver module, a main control unit, and a receiver, in which the main control unit comprises at least a lighting control unit and a decoder, and in which the decoder communicates with the receiver and the lighting control unit is electronically connected to the driver module.

The DIP-switch controller comprises a plurality of mechanical dual position slide switches (DIP-switches). The DIP-switch controller is configured to send a signal to the receiver that corresponds to the current positions of the DIP-switches. The decoder interprets signals received from the receiver using a pre-stored decoding program and sends the result to the lighting control unit. In response to receiving the result from the decoder, the lighting control unit sends a control signal to the drive module which adjusts the light source accordingly.

The present invention utilizes a feature of the mechanical dual position switches that their position remains unchanged unless manually adjusted to advantageously save a configuration set by the positions of the DIP-switches in a way that allows a user to readily repeat or verify the saved configuration (for example by visual or tactile inspection).

It is to be appreciated that a remote control as described herein may comprise any suitable number of switches, for defining any suitable number and types of control parameter of the remote control and/or lighting system with which the remote control is associated or comprised by.

Disclosed herein is a lighting system that comprises at least a light source, a lighting control unit, a receiver, and a remote controller. The remote controller comprises more than one mechanical switch that has more than one position. The remote controller is configured to transmit control signals corresponding to the positions of the mechanical switches to a receiver of the lighting system. Control parameters of the lighting system are defined by the positions of the mechanical switches. The control signals vary/depend on the positions of the mechanical switches.

Although illustrative embodiments and examples of the invention have been disclosed in detail herein, with reference to the accompanying drawings, it is to be understood that the invention is not limited to the precise embodiment and examples shown and/or described and that various changes and modifications can be effected therein by one skilled in the art without departing from the scope of the invention as defined by the appended claims.

## Claims

1. A remote controller, for transmitting control signals to a receiver of a lighting system comprising a light source, in which:
the remote controller comprises a plurality of mechanical switches, each mechanical switch having a plurality of selectable positions,
different combinations of positions of mechanical switches of the plurality of mechanical switches define adjustable control parameters for controlling the lighting system, and
the remote controller is configured to transmit control signals that correspond to the positions of the mechanical switches.

2. The remote controller of claim 1, wherein the plurality of mechanical switches comprises a plurality of dual position slide switches.

3. The remote controller of claim 1 or claim 2, wherein the plurality of mechanical switches comprises a plurality of groups of mechanical switches of the plurality of mechanical switches.

4. The remote controller of claim 3, comprising at least one group of a number j of mechanical switches, different combinations of positions of the mechanical switches of the group defining a maximum 2i of selectable values of an adjustable control parameter.

5. The remote controller of any preceding claim, comprising:
a send button operable to cause the remote controller to transmit a control signal corresponding to the positions of the mechanical switches.

6. The remote controller of any preceding claim, wherein different combinations of positions of the mechanical switches define different values of one or more of the following adjustable control parameters of the lighting system:
- light source output power level;
- presence sensor detecting distance;
- time delay;
- standby light source output level.

7. The remote controller of any preceding claim, comprising:
a dim-up button operable to cause the remote controller to transmit a control signal to increase the brightness of the light emitted by the light source, and
a dim-down button operable to cause the remote controller to transmit a control signal to decrease the brightness of the light emitted by the light source.

8. The remote controller of any preceding claim, operable to transmit a unique cypher key associated with the remote controller to the receiver.

9. The remote controller of any preceding claim, comprising a casing that comprises a lid section, the lid section movable between closed and open positions in which the mechanical switches are covered by the lid section and uncovered respectively.

10. A lighting system, comprising at least:
a light source,
a control unit for controlling the light source,
a receiver for communicating control information to the control unit, and
at least one remote controller for transmitting control signals to the receiver;
in which the or each remote controller is a remote controller as claimed in any one of claims 1 to 9.

11. The lighting system of claim 10, in which the or each remote controller is a remote controller as claimed in any one of claim 8, and
the unique cypher key associated with the or each remote controller is registrable by the receiver to render the receiver responsive only to a remote controller having a unique cypher key registered by the receiver.

12. The lighting system of claim 10 or II, comprising a presence sensor functional to provide a presence sensor signal to the control unit, the presence sensor signal indicative of the absence or presence of a human within a detecting distance of the presence sensor.

13. The lighting system of claim 12, wherein the detecting distance of the presence sensor is an adjustable control parameter of the lighting system defined by a combination of positions of mechanical switches of the plurality of mechanical switches of the remote controller.

14. The lighting system of any one of claims 10 to 13, comprising a timer.

15. The lighting system of any one of claims 10 to 14, comprising a light sensor functional to provide a light sensor signal to the control unit, the light sensor signal indicative of the ambient lux level.
